# EUROPEAN PATENT APPLICATION

(11) **EP 4 556 897 A1**
(43) Date of publication of application: **21.05.2025**
(21) Application number: 23839354.0
(22) Date of filing: 02.06.2023
(51) Int. Cl.: G01N 23/04

(54) **PHOTOGRAPHY JIG AND INFORMATION PROCESSING DEVICE**

(30) Priority: 11.07.2022 JP 2022111363
(71) Applicant: FUJIFILM Corporation, Tokyo 106-8620 (JP)
(72) Inventor: TANAKA, Eiichi, Tokyo 106-8620 (JP)
(74) Representative: Meissner Bolte Partnerschaft mbB
(86) International application number: PCT/JP2023/020718
(87) International publication number: WO 2024/014178

(57) **Abstract**

An imaging jig is used for capturing a radiographic image of an imaging target irradiated with radiation. The imaging jig includes a movement mechanism that moves a position of the imaging target such that a relative positional relationship between a radiation source that emits the radiation and the imaging target changes, and a display portion in which movement amount information indicating an amount of movement of the imaging target from an initial position is to be displayed. The movement amount information is distinguishably depicted in the radiographic image.

## Description

### 1. Field of the Invention

The disclosed technology relates to an imaging jig and an information processing apparatus.

### 2. Description of the Related Art

The following techniques are known in relation to radiographic imaging. For example, JP2018-179657A describes an X-ray inspection apparatus including an X-ray irradiation source, a table on which an object to be irradiated is to be placed, and an X-ray detector that receives X-rays transmitted through the object to be irradiated and detects a transmission image thereof. The X-ray inspection apparatus includes a shift mechanism that moves the X-ray detector between a first position and a second position, a control unit that controls the shift mechanism to move the X-ray detector, a matching processing unit that performs pattern matching between an image, at a first shift position, of a movement position detection jig placed on the table and a second image of the jig, a movement amount calculation unit that calculates an amount of movement of the X-ray detector between the first and second shift positions based on positions, in the first and second images, of the jig detected by the matching processing unit, and a storage unit that stores the amount of movement calculated by the movement amount calculation unit.

JP2013-15426A describes a radiation CT apparatus that performs pre-imaging to capture an image of a photographic subject at a placement position on a table, followed by main imaging to capture an image of a sample after moving the table and a radiation detector in the same manner as in the pre-imaging, and then reconstructs a tomographic image.

### SUMMARY OF THE INVENTION

Tomosynthesis is known as an imaging technique for reconstructing a cross-sectional plane at a desired depth position in a single tomographic imaging session. One generally known reconstruction processing method using tomosynthesis is a method called a shift-and-add method. The shift-and-add method is a method that shifts, for a series of radiographic images continuously captured while changing the relative positional relationship between a radiation source and an imaging target, each image by an appropriate amount in a scanning direction and superimposes the results to obtain a tomographic image focused on a specific cross-sectional plane. Adjusting the shift amount for each image makes it possible to obtain a tomographic image of any cross-sectional plane.

In a reconstruction process of the tomographic image, to calculate the respective shift amounts of the radiographic images, information indicating the inter-image relative positional relationship (hereinafter referred to as relative positional information) of an imaging target depicted in the radiographic images is required for each image. An imaging apparatus including a tomosynthesis function acquires a series of radiographic images by changing an imaging direction by robot control. The relative positional relationship of the imaging target depicted in the series of radiographic images can be easily calculated by cooperation with the robot control for the imaging direction. The imaging apparatus including the tomosynthesis function can easily obtain a tomographic image, but is expensive and is not easily accessible.

Accordingly, a method for acquiring a tomographic image using an imaging apparatus that does not include the tomosynthesis function (robot control function for the imaging direction) is considered. It is possible to acquire a plurality of radiographic images from different imaging directions by manually moving the position of the imaging target such that the relative positional relationship between the radiation source and the imaging target changes. In this case, however, it is not easy to acquire accurate relative positional information for each of the plurality of radiographic images from different imaging directions. In addition, it is necessary to manually associate the radiographic images with their corresponding relative positional information.

The disclosed technology has been developed in view of the above points, and an object thereof is to support the acquisition of relative positional information and the association between a radiographic image and the relative positional information.

An imaging jig according to the disclosed technology is an imaging jig to be used for capturing a radiographic image of an imaging target irradiated with radiation. The imaging jig includes a movement mechanism that moves a position of the imaging target such that a relative positional relationship between a radiation source that emits the radiation and the imaging target changes; and a display portion in which movement amount information indicating an amount of movement of the imaging target from an initial position is to be displayed. The movement amount information is distinguishably depicted in the radiographic image.

The movement mechanism may translationally or rotationally move the imaging target. A display of the movement amount information may change in conjunction with an operation of the movement mechanism. The movement amount information may be displayed by a mark made of a material having a different transmittance to the radiation from a material of the movement mechanism.

The movement mechanism may include a fixed unit having a fixed relative positional relationship with the radiation source, and a moving unit provided to be movable with respect to the fixed unit. The imaging target may move along with a movement of the moving unit. The display portion may include a first mark provided on the fixed unit and a second mark provided on the moving unit. The display portion may display the movement amount information based on a relative positional relationship between the first mark and the second mark.

An information processing apparatus according to the disclosed technology includes at least one processor and is for processing a radiographic image captured using the above-described imagingjig. The at least one processor is configured to acquire the radiographic image and recognize movement amount information depicted in the radiographic image.

The at least one processor may be configured to recognize the movement amount information included in the radiographic image by matching the movement amount information against a template pattern corresponding to the movement amount information.

A position detection mark for detecting a display position of the movement amount information may be distinguishably depicted in the radiographic image. The at least one processor may be configured to detect a position of the movement amount information included in the radiographic image, based on the position detection mark included in the radiographic image.

The at least one processor may be configured to record movement-amount-information-associated image data in a recording medium, the movement-amount-information-associated image data being obtained by associating the movement amount information and the radiographic image with each other.

The at least one processor may be configured to generate a tomographic image of the imaging target using a plurality of pieces of the movement-amount-information-associated data recorded in the recording medium for a plurality of radiographic images with different relative positional relationships between the radiation source and the imaging target.

According to the disclosed technology, it is possible to support the acquisition of relative positional information and the association between a radiographic image and the relative positional information.

### BRIEF DESCRIPTION OF THE DRAWINGS

Fig. 1 is a perspective view of an example of a configuration of an imagingjig according to an embodiment of the disclosed technology;
Fig. 2 is an exploded perspective view of a fixed unit and a moving unit according to the embodiment of the disclosed technology;
Fig. 3 is a perspective view illustrating a linear movement of the moving unit on the fixed unit according to the embodiment of the disclosed technology;
Fig. 4A is a plan view of the moving unit, as viewed from the side of a contact surface with the fixed unit, according to the embodiment of the disclosed technology;
Fig. 4B is a plan view of the fixed unit, as viewed from the side of a contact surface with the moving unit, according to the embodiment of the disclosed technology;
Fig. 5A is a perspective view of marks when the imagingjig according to the embodiment of the disclosed technology is viewed from an upper surface side of the moving unit;
Fig. 5B is a perspective view of the marks when the imaging jig according to the embodiment of the disclosed technology is viewed from the upper surface side of the moving unit;
Fig. 6A is a side view illustrating an example of a method of using the imaging jig according to the embodiment of the disclosed technology;
Fig. 6B is a side view illustrating the example of the method of using the imaging jig according to the embodiment of the disclosed technology;
Fig. 7A is a diagram illustrating an example of a radiographic image captured using the imaging jig according to the embodiment of the disclosed technology;
Fig. 7B is a diagram illustrating an example of a radiographic image captured using the imaging jig according to the embodiment of the disclosed technology;
Fig. 8 is a diagram illustrating an example of a hardware configuration of an information processing apparatus according to the embodiment of the disclosed technology;
Fig. 9 is a functional block diagram illustrating an example of a functional configuration of the information processing apparatus according to the embodiment of the disclosed technology;
Fig. 10 is a flowchart illustrating an example of a process implemented by a CPU executing an information processing program according to the embodiment of the disclosed technology;
Fig. 11 is a diagram illustrating an example of another display format of movement amount information according to the embodiment of the disclosed technology;
Fig. 12 is a diagram illustrating an example of position detection marks arranged around a mark according to the embodiment of the disclosed technology;
Fig. 13 is a diagram illustrating an example of another display format of the movement amount information according to the embodiment of the disclosed technology;
Fig. 14A is a side view illustrating an example of a configuration of an imaging jig according to another embodiment of the disclosed technology and a method of using the imaging jig;
Fig. 14B is a side view illustrating an example of the configuration of the imaging jig according to the other embodiment of the disclosed technology and the method of using the imaging jig;
Fig. 15A is a plan view corresponding to Fig. 14A;
Fig. 15B is a plan view corresponding to Fig. 14B;
Fig. 16A is a diagram illustrating an example of a radiographic image captured using the imaging jig according to the other embodiment of the disclosed technology;
Fig. 16B is a diagram illustrating an example of a radiographic image captured using the imaging jig according to the other embodiment of the disclosed technology;
Fig. 17A is a side view illustrating an example of a configuration of an imaging jig according to another embodiment of the disclosed technology and a method of using the imaging jig; and
Fig. 17B is a side view illustrating an example of the configuration of the imaging jig according to the other embodiment of the disclosed technology and the method of using the imaging jig.

### DESCRIPTION OF THE PREFERRED EMBODIMENTS

Hereinafter, an example of embodiments of the disclosed technology will be described with reference to the drawings. In each drawing, identical or equivalent components and portions are designated by the same reference numerals, and redundant descriptions are omitted.

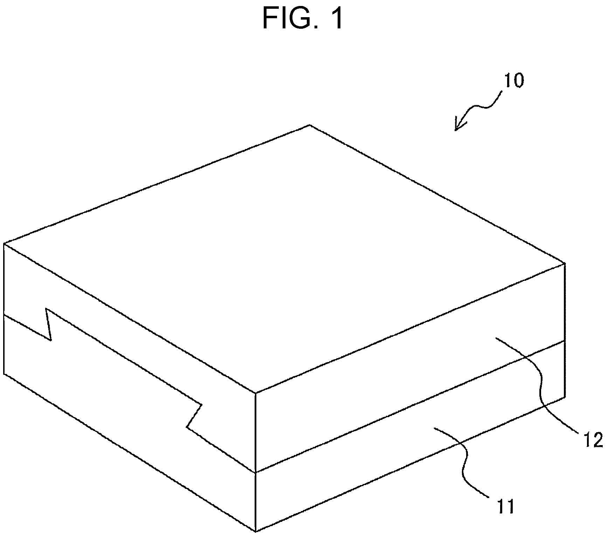

Fig. 1 is a perspective view of an example of a configuration of an imaging jig 10 according to an embodiment of the disclosed technology. The imaging jig 10 is a holding device to be used for capturing a radiographic image of an imaging target irradiated with radiation. The imaging jig 10 includes a fixed unit 11 and a moving unit 12. The fixed unit 11 has a fixed relative position with respect to a radiation source (not illustrated) that emits radiation. The moving unit 12 is provided to be movable with respect to the fixed unit 11. The fixed unit 11 and the moving unit 12 are examples of a "movement mechanism" in the disclosed technology.

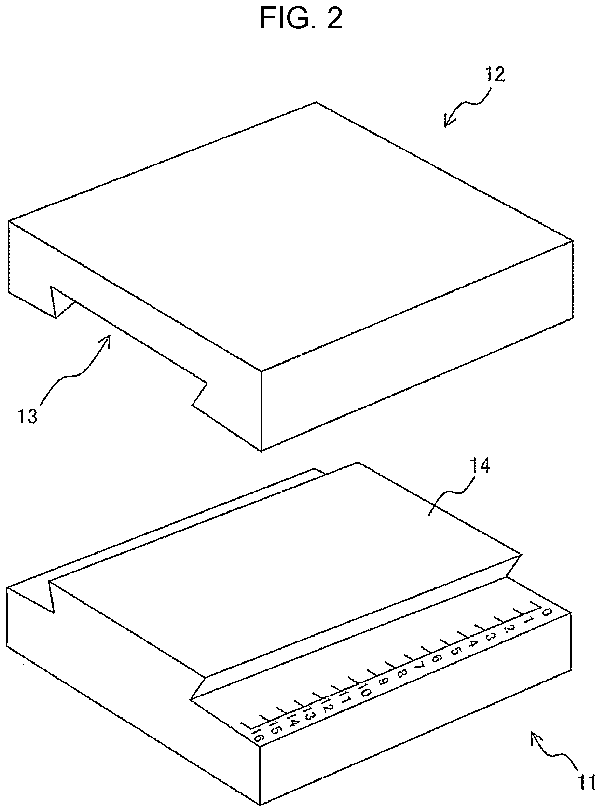

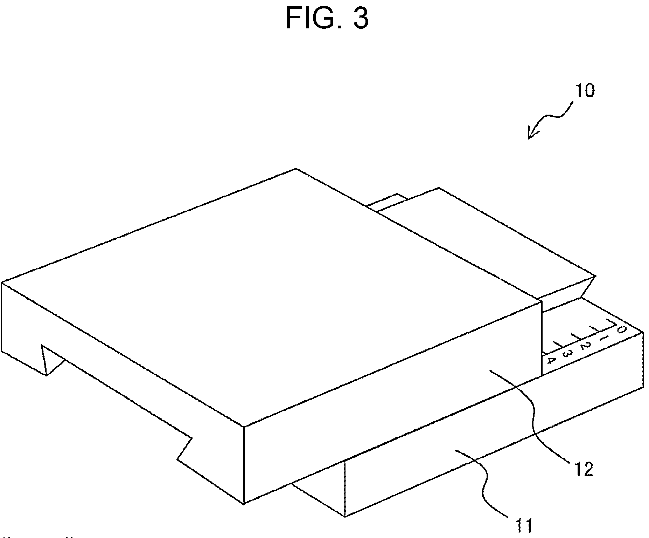

Fig. 2 is an exploded perspective view of the fixed unit 11 and the moving unit 12. The moving unit 12 is provided with, in a contact surface thereof with the fixed unit 11, a guide groove 13 that extends linearly. The fixed unit 11 is provided with, on a contact surface thereof with the moving unit 12, a convex guide rail 14 that extends linearly. As illustrated in Fig. 3, the moving unit 12 can move linearly (translationally move) on the fixed unit 11 along the guide rail 14 with the guide rail 14 fitted in the guide groove 13. That is, the imaging jig 10 functions as a so-called linear motion stage. The movement of the moving unit 12 can be performed manually or automatically.

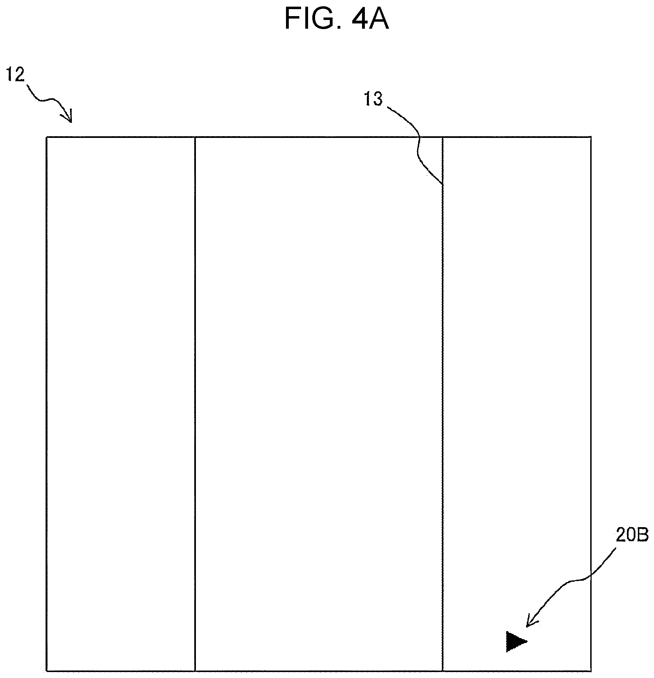

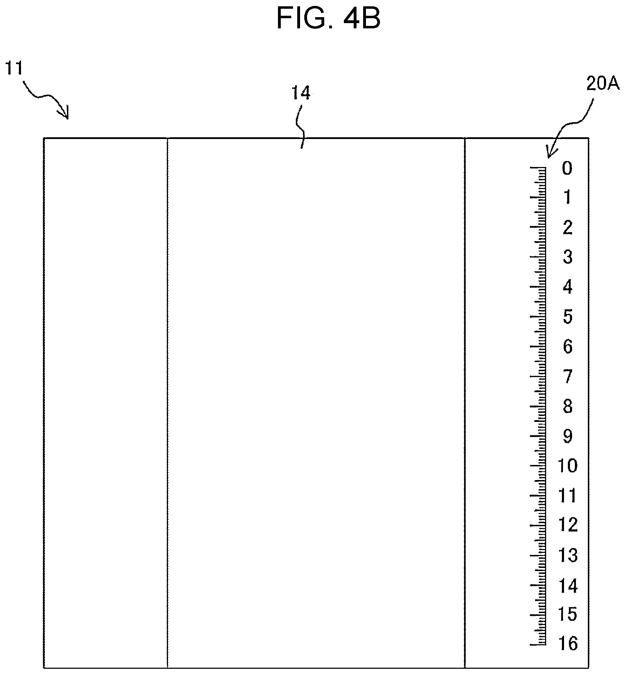

Fig. 4A is a plan view of the moving unit 12 as viewed from the side of the contact surface with the fixed unit 11. Fig. 4B is a plan view of the fixed unit 11 as viewed from the side of the contact surface with the moving unit 12. The contact surfaces of the fixed unit 11 and the moving unit 12 are provided with marks 20A and 20B, respectively, for displaying movement amount information indicating the amount of movement of the moving unit 12 from an initial position. The portions of the imaging jig 10 where the mark 20A and the mark 20B are formed are examples of a "display portion" in the disclosed technology. The mark 20A is a linear scale with numerical values assigned to the scale, the scale extending along the extension direction of the guide rail 14, and is drawn on the outside of the guide rail 14. The mark 20B is a pointer pointing to a position on the mark 20A (scale), and is drawn on the outside of the guide groove 13. The initial position can be determined as desired. For example, as illustrated in Fig. 1, the initial position may be set as a position where an end surface of the fixed unit 11 and an end surface of the moving unit 12 are aligned with each other in the movement direction of the moving unit 12.

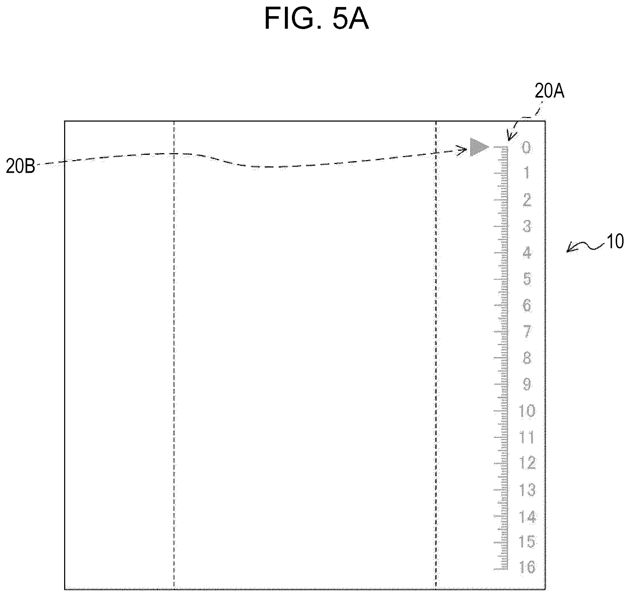

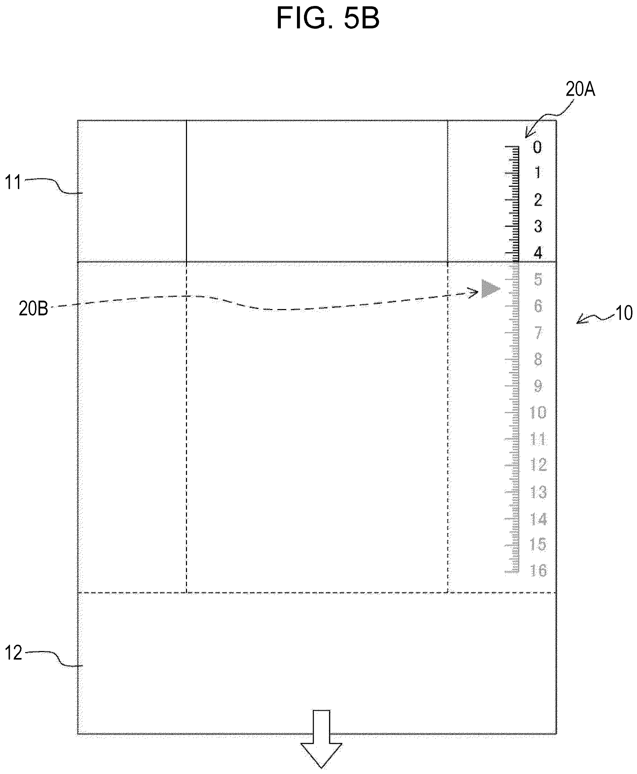

Figs. 5A and 5B are perspective views of the mark 20A and the mark 20B when the imaging jig 10 is viewed from the upper surface side of the moving unit 12. Fig. 5A illustrates a case where the moving unit 12 is positioned at the initial position, and Fig. 5B illustrates a case where the moving unit 12 is positioned at a movement position displaced from the initial position. When the moving unit 12 is positioned at the initial position, a numerical value N1 indicating a position pointed to by the mark 20B (pointer) on the mark 20A (scale) is typically "0". As the moving unit 12 moves from the initial position, the position pointed to by the mark 20B (pointer) on the mark 20A (scale) changes accordingly. A numerical value N2 indicating the position pointed to by the mark 20B (pointer) on the mark 20A (scale) at the movement position indicates the amount of movement of the moving unit 12 from the initial position. In other words, the display of the movement amount information by the marks 20A and 20B changes in conjunction with the operation of the moving unit 12. It should be noted that the numerical value N1 indicating the position pointed to by the mark 20B (pointer) on the mark 20A (scale) when the moving unit 12 is positioned at the initial position need not be "0". In the case where the numerical value N1 is not "0", the difference between the numerical value N2 at the movement position and the numerical value N1 at the initial position (N2 - N1) corresponds to the amount of movement of the moving unit 12.

The fixed unit 11 and the moving unit 12 are made of a material having a relatively high transmittance to radiation (X-rays). Examples of the material of the fixed unit 11 and the moving unit 12 may include plastics such as polyethylene (PE), polypropylene (PP), polyethylene terephthalate (PET), and polystyrene (PS). In contrast, the marks 20A and 20B are drawn on the moving unit 12 and the fixed unit 11, respectively, using a material having a relatively low transmittance to radiation (X-rays). Examples of the material of the marks 20A and 20B may include metals such as aluminum, copper, and lead. In this way, the material of the marks 20A and 20B has a lower transmittance to radiation (X-rays) than the material of the fixed unit 11 and the moving unit 12. Thus, the movement amount information can be depicted in a radiographic image captured using the imaging jig 10.

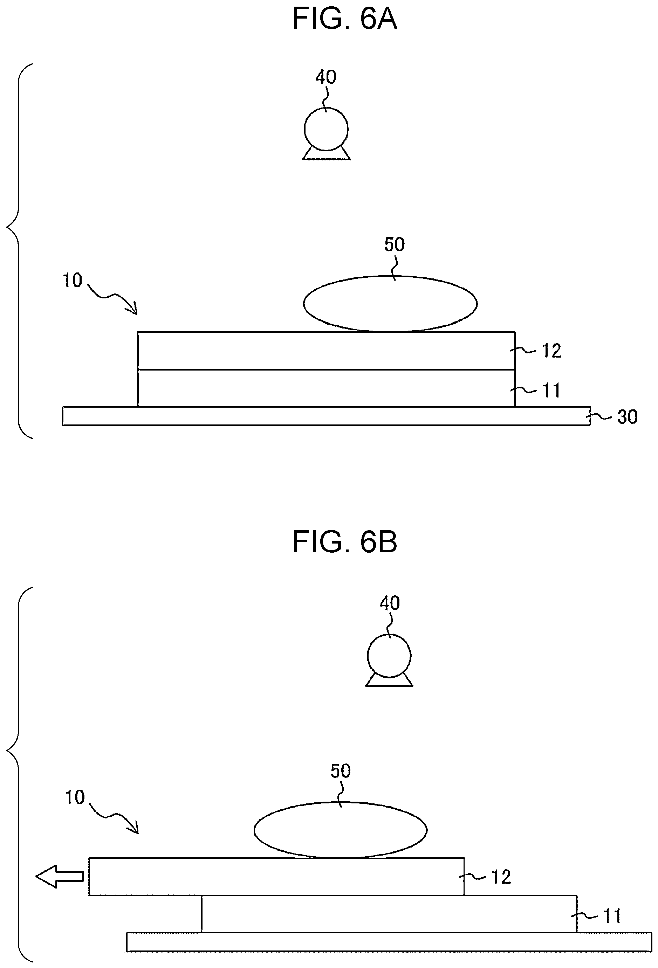

Figs. 6A and 6B are side views illustrating an example of a method of using the imaging jig 10. Fig. 6A illustrates a case where the moving unit 12 is positioned at the initial position, and Fig. 6B illustrates a case where the moving unit 12 is positioned at a movement position displaced from the initial position. As illustrated in Figs. 6A and 6B, an imaging target 50 for a radiographic image is placed on top of the moving unit 12, and a radiation detector 30 is disposed under the fixed unit 11. A radiation source 40 that emits radiation is disposed at a position such that the imaging jig 10 and the imaging target 50 are interposed between the radiation source 40 and the radiation detector 30. The relative positions of the radiation source 40, the imaging jig 10, and the radiation detector 30 are determined such that the imaging target 50, the mark 20A, and the mark 20B fall within an imaging field of view. The radiation detector 30 may be a known flat panel detector that generates a radiographic image.

A radiographic image of the imaging target 50 is captured when, as illustrated in Fig. 6A, the moving unit 12 is kept at the initial position. Thereafter, as illustrated in Fig. 6B, the moving unit 12 is translationally moved to the left in the figure to move the imaging target 50 to the movement position together with the moving unit 12. That is, the imaging jig 10 moves the position of the imaging target 50 such that the relative positional relationship between the radiation source 40 and the imaging target 50 changes. A radiographic image of the imaging target 50 is captured at each of a plurality of different movement positions. During the capturing of the radiographic images, the radiation source 40, the fixed unit 11, and the radiation detector 30 are maintained in a stationary state.

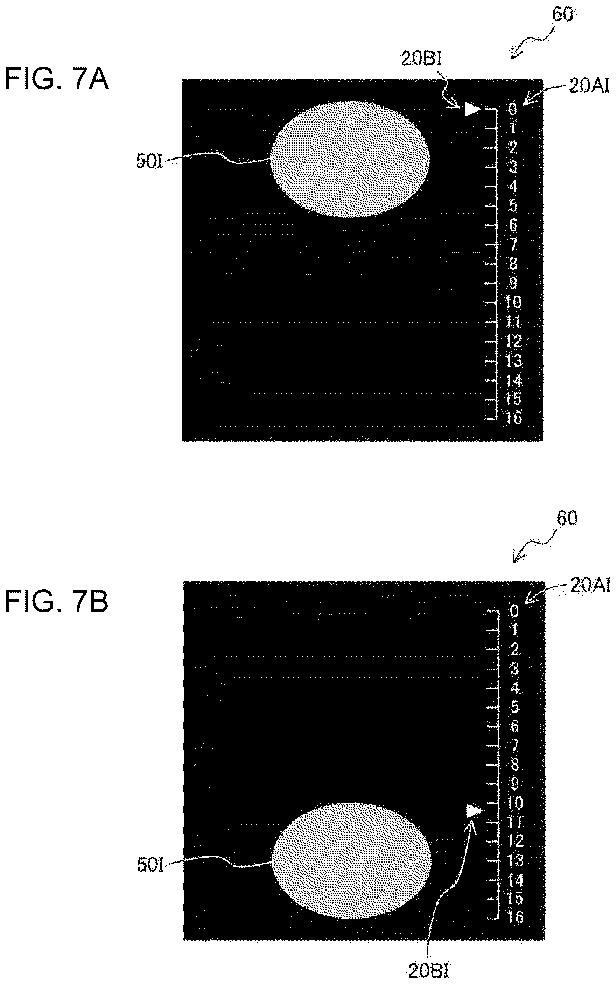

Figs. 7A and 7B are each a diagram illustrating an example of a radiographic image 60 captured using the imaging jig 10. Fig. 7A illustrates a case where the moving unit 12 is positioned at the initial position, and Fig. 7B illustrates a case where the moving unit 12 is positioned at a movement position displaced from the initial position. In the radiographic image 60, an image 20AI of the mark 20A and an image 20BI of the mark 20B are depicted together with an image 50I of the imaging target 50. As illustrated in Fig. 7B, the amount of movement of the imaging target 50 at the movement position from the initial position can be identified based on the image 20AI of the mark 20A and the image 20BI of the mark 20B when the moving unit 12 is positioned at the movement position. In other words, the movement amount information displayed by the mark 20A and the mark 20B indicates the amount of movement of the imaging target 50 from the initial position. The radiographic image generated by the radiation detector 30 is stored in an image server (not illustrated).

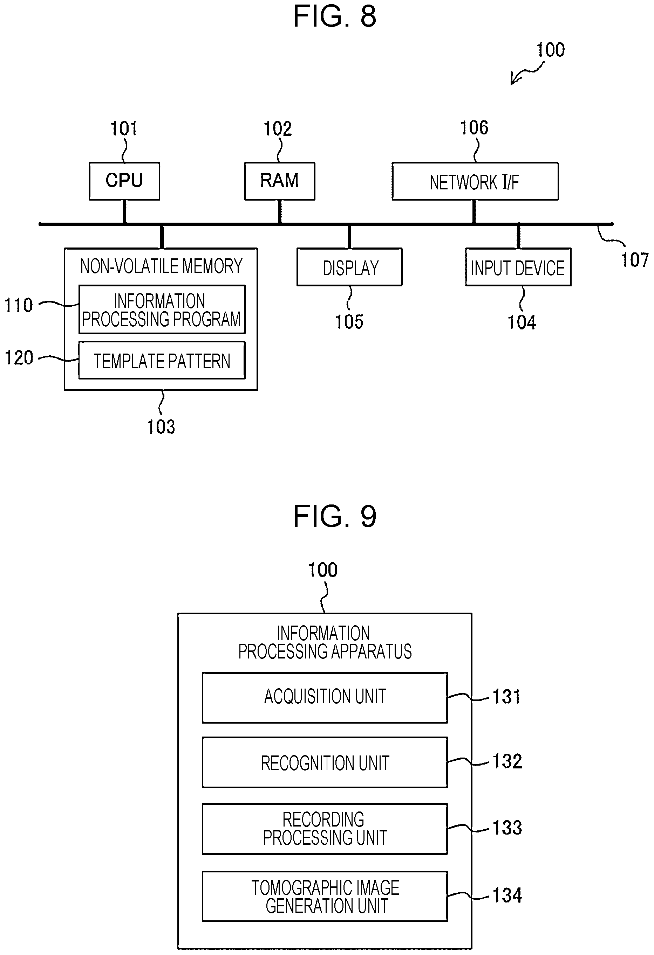

Fig. 8 is a diagram illustrating an example of a hardware configuration of an information processing apparatus 100 that performs processing on a radiographic image captured using the imaging jig 10. The information processing apparatus 100 includes a central processing unit (CPU) 101, a random access memory (RAM) 102, a non-volatile memory 103, an input device 104, a display 105, and a network interface 106. These pieces of hardware are connected to a bus 107.

The display 105 is, for example, a liquid crystal display or a light emitting diode (LED) display. The input device 104 includes, for example, a keyboard and a mouse. The input device 104 may include a proximity input device such as a touch panel display, a voice input device such as a microphone, and a contactless input device such as a camera or a sensor. The network interface 106 is an interface that allows the information processing apparatus 100 to connect, via a network, to the image server (not illustrated) in which the radiographic image is stored.

The non-volatile memory 103 is a non-volatile storage medium such as a hard disk and a flash memory. The non-volatile memory 103 stores an information processing program 110 and a template pattern 120. Details of the template pattern 120 will be described below. The RAM 102 is a work memory for the CPU 101 to execute processing. The CPU 101 loads the information processing program 110 stored in the non-volatile memory 103 into the RAM 102 and executes processing in accordance with the information processing program 110. The CPU 101 is an example of a "processor" in the disclosed technology.

Fig. 9 is a functional block diagram illustrating an example of a functional configuration of the information processing apparatus 100. The information processing apparatus 100 has an acquisition unit 131, a recognition unit 132, a recording processing unit 133, and a tomographic image generation unit 134. When the CPU 101 executes the information processing program 110, the CPU 101 functions as the acquisition unit 131, the recognition unit 132, the recording processing unit 133, and the tomographic image generation unit 134.

The acquisition unit 131 accesses the image server (not illustrated) and acquires a series of radiographic images of the same imaging target captured using the imaging jig 10 while the moving unit 12 is being moved. That is, a plurality of radiographic images with different relative positional relationships between the radiation source 40 and the imaging target are acquired. The acquisition unit 131 may directly acquire the radiographic images from the radiation detector 30 without the intervention of the image server.

The recognition unit 132 recognizes, for each of the plurality of radiographic images acquired by the acquisition unit 131, movement amount information depicted in the radiographic image. The recognition unit 132 recognizes the movement amount information using the template pattern 120 recorded in the non-volatile memory 103. The template pattern 120 has a pattern similar to those of the image 20AI of the mark 20A and the image 20BI of the mark 20B (see Figs. 7A and 7B) depicted in the radiographic image. The recognition unit 132 extracts an image portion similar to the template pattern 120 from the radiographic image. The recognition unit 132 identifies a scale included in the extracted area, numerical values assigned to the scale, and a pointer pointing to a position on the scale and recognizes the numerical value corresponding to the position pointed to by the pointer on the scale as movement amount information.

The recording processing unit 133 records the movement amount information recognized by the recognition unit 132 and the corresponding radiographic image in the non-volatile memory 103 in association with each other. The recording processing unit 133 associates, for each of the plurality of radiographic images acquired by the acquisition unit 131, movement amount information and the radiographic image with each other, and records each of the pieces of image data of the radiographic images associated with the movement amount information (hereinafter referred to as movement-amount-information-associated image data) in the non-volatile memory 103.

The tomographic image generation unit 134 generates a tomographic image of the imaging target using the plurality of pieces of movement-amount-information-associated image data recorded in the non-volatile memory 103. The tomographic image generation unit 134 generates a tomographic image using, for example, the shift-and-add method, which is one of the tomographic image reconstruction methods. The shift-and-add method is a method that shifts, for a series of radiographic images continuously captured while changing the relative positional relationship between a radiation source and an imaging target, each image by an appropriate amount in a scanning direction and superimposes the results to obtain a tomographic image focused on a specific cross-sectional plane. Adjusting the shift amount for each image makes it possible to obtain a tomographic image of any cross-sectional plane. The tomographic image generation unit 134 calculates the shift amount of each radiographic image using the movement amount information included in the movement-amount-information-associated image data when the tomographic image generation unit 134 generates, using the shift-and-add method, a tomographic image of a cross-sectional plane designated by a user.

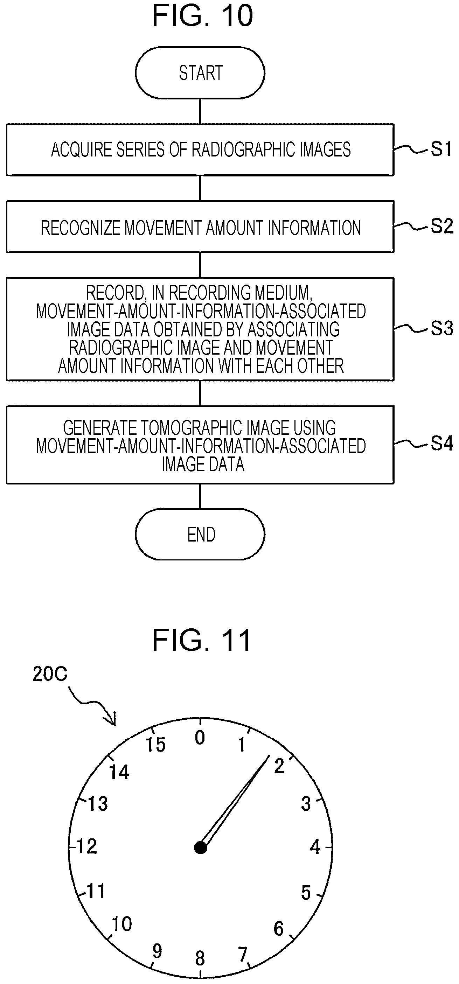

Fig. 10 is a flowchart illustrating an example of a process implemented by the CPU 101 executing the information processing program 110. The information processing program 110 is executed when, for example, the user gives an instruction to start the process by operating the input device 104.

In step S1, the acquisition unit 131 accesses the image server (not illustrated) and acquires a series of radiographic images of the same imaging target captured using the imaging jig 10 while the moving unit 12 is being moved.

In step S2, the recognition unit 132 recognizes, for each of the plurality of radiographic images acquired in step S1, movement amount information depicted in the radiographic image using the template pattern 120 recorded in the non-volatile memory 103.

In step S3, the recording processing unit 133 records, in the non-volatile memory 103, movement-amount-information-associated image data obtained by associating the movement amount information recognized in step S2 and the corresponding radiographic image with each other. The recording processing unit 133 records the movement-amount-information-associated image data for each of the plurality of radiographic images acquired in step S1.

In step S4, the tomographic image generation unit 134 generates a tomographic image of the imaging target using the plurality of pieces of movement-amount-information-associated image data recorded in the non-volatile memory 103 in step S3. The tomographic image generation unit 134 calculates the shift amount of each radiographic image using the movement amount information included in the movement-amount-information-associated image data when the tomographic image generation unit 134 generates, using the shift-and-add method, a tomographic image of a cross-sectional plane designated by a user.

As described above, the imaging jig 10 according to the embodiment of the disclosed technology includes a movement mechanism that moves the position of an imaging target such that the relative positional relationship between a radiation source that emits radiation and the imaging target changes, and a display portion in which movement amount information indicating an amount of movement of the imaging target from an initial position is to be displayed. The movement amount information is distinguishably depicted in a radiographic image captured using the imaging jig 10.

In addition, the information processing apparatus 100 according to the embodiment of the disclosed technology processes the radiographic image captured using the imaging jig 10. The information processing apparatus 100 acquires the radiographic image and recognizes movement amount information depicted in the radiographic image. The information processing apparatus 100 records, in a recording medium (the non-volatile memory 103), movement-amount-information-associated image data obtained by associating the movement amount information and the radiographic image with each other. The information processing apparatus 100 generates a tomographic image of the imaging target using a plurality of pieces of movement-amount-information-associated image data.

In the reconstruction process of the tomographic image, information indicating the relative positional relationship (relative positional information) of the imaging target depicted in each radiographic image is required for each image. An imaging apparatus including a tomosynthesis function acquires a series of radiographic images by changing an imaging direction by robot control. The relative positional relationship of the imaging target depicted in the series of radiographic images can be easily calculated by cooperation with the robot control for the imaging direction. The imaging apparatus including the tomosynthesis function can easily obtain a tomographic image, but is expensive and is not easily accessible.

Accordingly, a method for acquiring a tomographic image using an imaging apparatus that does not include the tomosynthesis function (robot control function for the imaging direction) is considered. For example, it is possible to acquire a plurality of radiographic images from different imaging directions by manually moving the position of the imaging target such that the relative positional relationship between the radiation source and the imaging target changes. In this case, however, it is not easy to acquire accurate relative positional information indicating the inter-image relative positional relationship for each of the plurality of radiographic images from different imaging directions. In addition, it is necessary to manually associate the radiographic images with their corresponding relative positional information.

The imaging jig 10 according to the present embodiment allows the movement amount information to be distinguishably depicted in a radiographic image acquired using the imaging jig 10. The movement amount information can be used as relative positional information indicating the inter-image relative positional relationship of the imaging target depicted in each of the series of radiographic images. That is, the imaging jig 10 can support the acquisition of relative positional information and the association between a radiographic image and the relative positional information.

It should be noted that the display of the movement amount information is not limited to that using the marks 20A and 20B described above. Fig. 11 is a diagram illustrating an example of another display format of the movement amount information. As illustrated in Fig. 11, the movement amount information may be displayed by a mark 20C. The mark 20C is provided on either the fixed unit 11 or the moving unit 12. The mark 20C includes a scale provided along the circumference of a circle, numerical values assigned to the scale, and a pointer that points to a position on the scale. The pointer rotates about the center of the circle serving as a rotational axis in conjunction with the movement of the moving unit 12. That is, the tip of the pointer moves along the scale. The angle of rotation of the pointer is proportional to the amount of movement of the moving unit 12 from the initial position. That is, the position pointed to by the pointer on the scale indicates the amount of movement of the moving unit 12 from the initial position. Examples of a mechanism for rotating the pointer in conjunction with the movement of the moving unit 12 may include a configuration that transmits the translational movement of the moving unit 12 to the pointer through a rack gear and a pinion gear. The scale, the numerical values, and the pointer of the mark 20C are made of a material having a relatively low transmittance to radiation. This makes it possible to depict the movement amount information in the radiographic image.

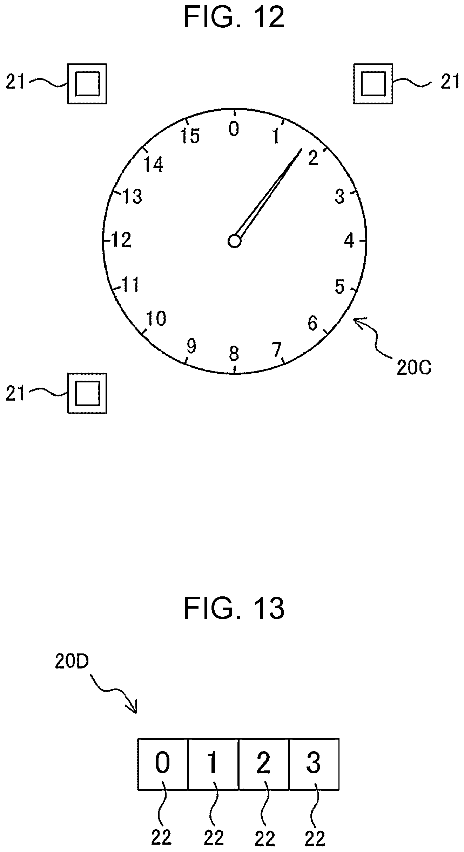

The imaging jig 10 may have a position detection mark for detecting a display position of the movement amount information. Fig. 12 is a diagram illustrating an example of position detection marks 21 arranged around the mark 20C. The position detection marks 21 are depicted in the radiographic image together with the mark 20C. In the information processing apparatus 100, the recognition unit 132 detects the position of the mark 20C based on the position detection marks 21 included in the radiographic image, and performs image recognition on the detected mark 20C.

Fig. 13 is a diagram illustrating an example of another display format of the movement amount information. As illustrated in Fig. 13, the movement amount information may be displayed by a mark 20D. The mark 20D is provided on either the fixed unit 11 or the moving unit 12. The mark 20D includes numerical values of four digits. Each digit is marked on a rotation drum 22 having numerical values from 0 to 9 written on a peripheral surface thereof. As the rotation drum 22 rotates, the display of the numerical value of the corresponding digit changes. The rotation drum 22 corresponding to each digit rotates in conjunction with the movement of the moving unit 12. That is, the amount of movement of the moving unit 12 from the initial position is indicated by numerical values of four digits constituting the mark 20D. The number of digits of the mark 20D can be changed as appropriate. Examples of a mechanism for rotating the rotation drums 22 in conjunction with the movement of the moving unit 12 may include a configuration that transmits the translational movement of the moving unit 12 to the rotation drums 22 through a rack gear and a pinion gear. The numerical values of the respective digits of the mark 20C are made of a material having a relatively high transmittance to radiation. This makes it possible to depict the movement amount information in the radiographic image.

### Second Embodiment

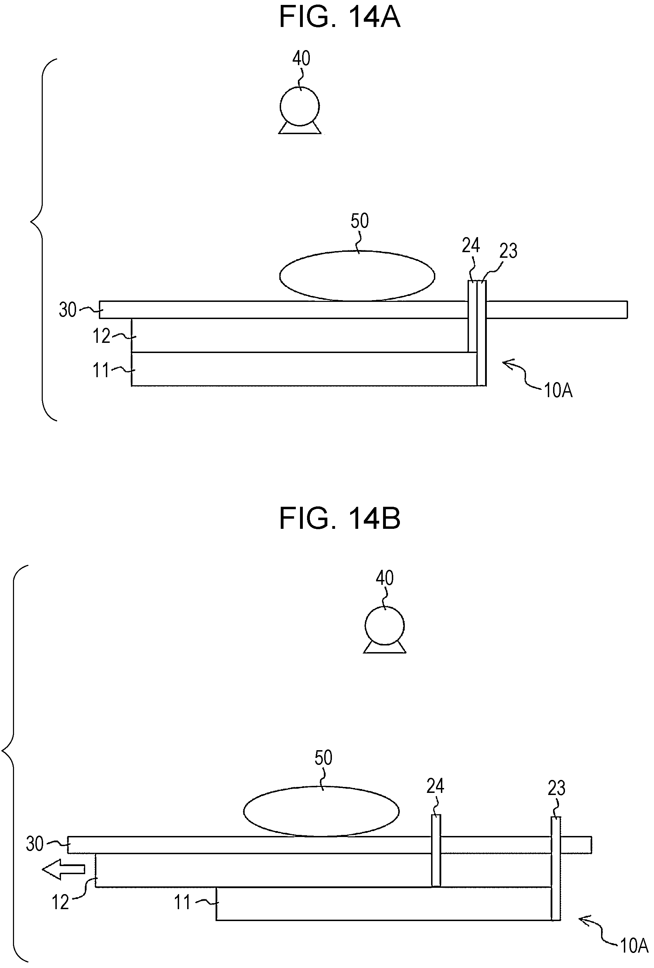

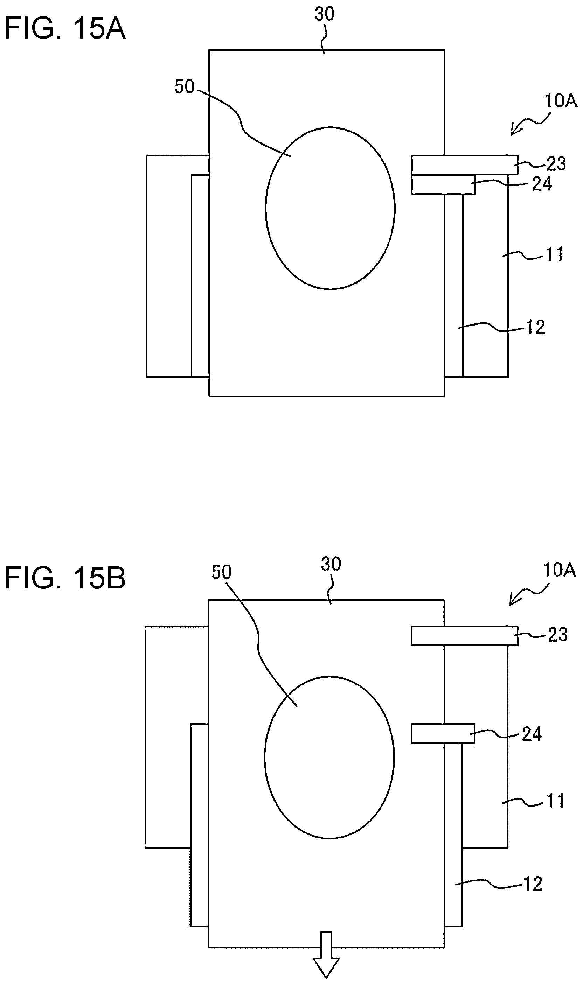

Figs. 14A and 14B are side views illustrating an example of a configuration of an imaging jig 10A according to a second embodiment of the disclosed technology and a method of using the imaging jig 10A. Figs. 15A and 15B are plan views corresponding to Figs. 14A and 14B, respectively. Figs. 14A and 15A illustrate a case where the moving unit 12 is positioned at the initial position, and Figs. 14B and 15B illustrate a case where the moving unit 12 is positioned at a movement position displaced from the initial position. The radiation detector 30 is disposed on top of the moving unit 12, and the imaging target 50 is placed on top of the radiation detector 30. The radiation source 40, which emits radiation, is disposed at a position such that the imaging target 50 is interposed between the radiation source 40 and the radiation detector 30.

The imaging jig 10A has a mark member 23 provided at an end of the fixed unit 11 and a mark member 24 provided at an end of the moving unit 12. The mark member 23 has a first portion having one end connected to the fixed unit 11 and extending upward from a connection portion with the fixed unit 11 to a position higher than the height of an imaging surface of the radiation detector 30, and a second portion that protrudes from an upper end of the first portion so as to overlap with the imaging surface of the radiation detector 30. Likewise, the mark member 24 has a first portion having one end connected to the moving unit 12 and extending upward from a connection portion with the moving unit 12 to the position higher than the height of the imaging surface of the radiation detector 30, and a second portion that protrudes from an upper end of the first portion so as to overlap with the imaging surface of the radiation detector 30. The relative positions of the radiation source 40, the imaging jig 10A, and the radiation detector 30 are determined such that the imaging target 50 and the mark members 23 and 24 fall within an imaging field of view.

A radiographic image of the imaging target 50 is captured when, as illustrated in Figs. 14A and 15A, the moving unit 12 is kept at the initial position. Thereafter, as illustrated in Figs. 14B and 15B, the moving unit 12 is translationally moved to the left in the figures to move the radiation detector 30 and the imaging target 50 to the movement position together with the moving unit 12. That is, the imaging jig 10A moves the position of the imaging target 50 such that the relative positional relationship between the radiation source 40 and the imaging target 50 changes. A radiographic image of the imaging target 50 is captured at each of a plurality of different movement positions. During the capturing of the radiographic images, the radiation source 40 and the fixed unit 11 are maintained in a stationary state.

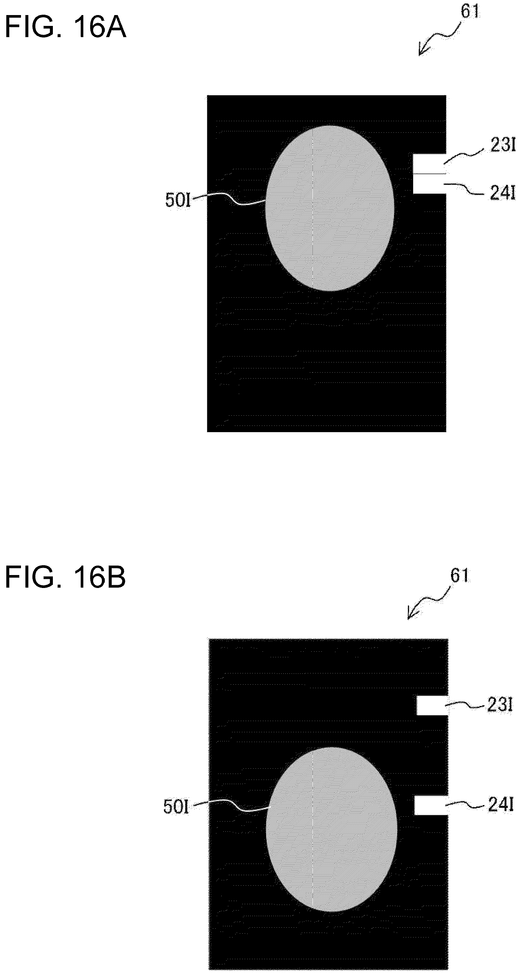

Figs. 16A and 16B are each a diagram illustrating an example of a radiographic image 61 captured using the imaging jig 10A. Fig. 16A illustrates a case where the moving unit 12 is positioned at the initial position, and Fig. 16B illustrates a case where the moving unit 12 is positioned at a movement position displaced from the initial position. In the radiographic image 61, an image 23I of the mark member 23 and an image 24I of the mark member 24 are depicted together with an image 50I of the imaging target 50. As illustrated in Fig. 16B, the amount of movement of the imaging target 50 at the movement position from the initial position can be identified based on the image 23I of the mark member 23 and the image 24I of the mark member 24 when the moving unit 12 is positioned at the movement position. In other words, the movement amount information displayed by the mark member 23 and the mark member 24 indicates the amount of movement of the imaging target 50 from the initial position.

In the present embodiment, the recognition unit 132 of the information processing apparatus 100 recognizes the movement amount information using the template pattern 120 recorded in the non-volatile memory 103. The template pattern 120 has a pattern similar to those of the image 23I of the mark member 23 and the image 24I of the mark member 24 depicted in the radiographic image. The recognition unit 132 extracts an image portion similar to the template pattern 120 from the radiographic image. The recognition unit 132 recognizes, as the movement amount information, a numerical value corresponding to the distance between the image of the mark member 23 and the image of the mark member 24 included in the extracted region.

Like the imaging jig 10 according to the first embodiment, the imaging jig 10A according to the present embodiment can support the acquisition of relative positional information indicating the inter-image relative positional relationship of an imaging target depicted in each of a plurality of radiographic images and the association between the radiographic image and the relative positional information.

### Third Embodiment

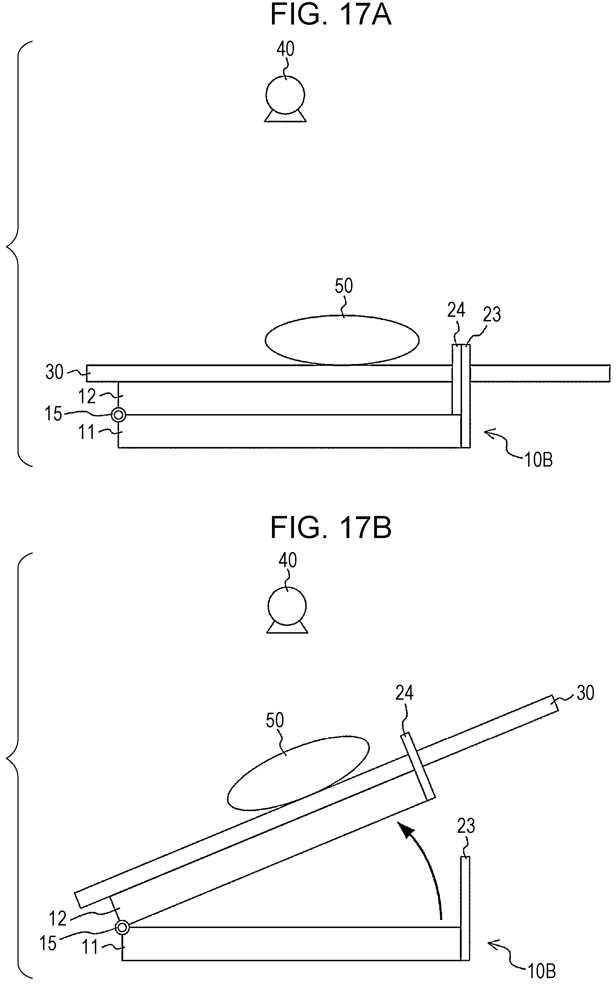

Figs. 17A and 17B are side views illustrating an example of a configuration of an imaging jig 10B according to a third embodiment of the disclosed technology and a method of using the imaging jig 10B. Fig. 17A illustrates a case where the moving unit 12 is positioned at the initial position, and Fig. 17B illustrates a case where the moving unit 12 is positioned at a movement position displaced from the initial position. The radiation detector 30 is disposed on top of the moving unit 12, and the imaging target 50 is placed on top of the radiation detector 30. The radiation source 40, which emits radiation, is disposed at a position such that the imaging target 50 is interposed between the radiation source 40 and the radiation detector 30.

In the present embodiment, the fixed unit 11 and the moving unit 12 are connected to each other through a hinge 15 at their respective ends. The moving unit 12 is capable of rotational movement about the hinge 15 serving as a rotational axis. That is, in the imaging jig 10B according to the present embodiment, a movement mechanism constituted by the fixed unit 11 and the moving unit 12 can rotationally move the imaging target 50. The movement of the moving unit 12 can be performed manually or automatically.

The imaging jig 10B has a mark member 23 provided at an end of the fixed unit 11 and a mark member 24 provided at an end of the moving unit 12. The configurations of the mark members 23 and 24 are the same as those in the second embodiment described above, and descriptions thereof are omitted.

A radiographic image of the imaging target 50 is captured when, as illustrated in Fig. 17A, the moving unit 12 is kept at the initial position. Thereafter, as illustrated in Fig. 17B, the moving unit 12 is rotationally moved to move the radiation detector 30 and the imaging target 50 to the movement position together with the moving unit 12. That is, the imaging jig 10B moves the position of the imaging target 50 such that the relative positional relationship between the radiation source 40 and the imaging target 50 changes. A radiographic image of the imaging target 50 is captured at each of a plurality of different movement positions. During the capturing of the radiographic images, the radiation source 40 and the fixed unit 11 are maintained in a stationary state.

In the radiographic images, an image of the mark member 23 and an image of the mark member 24 are depicted together with an image of the imaging target 50. The amount of movement of the imaging target 50 at the movement position from the initial position can be identified based on the image of the mark member 23 and the image of the mark member 24 when the moving unit 12 is positioned at the movement position. In other words, the movement amount information displayed by the mark member 23 and the mark member 24 indicates the amount of movement of the imaging target 50 from the initial position.

Like the imaging jig according to the first embodiment, the imaging jig 10B according to the present embodiment can support the acquisition of relative positional information indicating the inter-image relative positional relationship of an imaging target depicted in each of a plurality of radiographic images and the association between the radiographic image and the relative positional information.

In the embodiments described above, for example, various types of processors provided below can be used as the hardware structure of processing units that execute various types of processing, such as the acquisition unit 131, the recognition unit 132, the recording processing unit 133, and the tomographic image generation unit 134. As described above, the various types of processors include, in addition to a CPU and a GPU, which are general-purpose processors that execute software (programs) to function as various types of processing units, programmable logic devices (PLDs), which are processors whose circuit configurations can be changed after manufacture, such as FPGAs, dedicated electric circuits that are processors having circuit configurations specifically designed to execute specific processing tasks, such as application specific integrated circuits (ASICs), and the like.

One processing unit may be configured using one of such various types of processors, or may be configured using a combination of two or more processors of the same or different types (e.g., a combination of multiple FPGAs or a combination of a CPU and an FPGA). Alternatively, multiple processing units may be configured using a single processor.

Examples of configuring multiple processing units using a single processor include, first, a form in which, as represented by computers such as client and server computers, one processor is configured using a combination of one or more CPUs and software and this processor functions as multiple processing units. The examples include, second, a form in which, as represented by a system on chip (SoC) or the like, a processor is used that implements the functions of an entire system including multiple processing units on a single integrated circuit (IC) chip. As described above, various types of processing units are configured using one or more of the above-described various types of processors as a hardware structure.

Further, the hardware structures of the above various types of processors may include, more specifically, an electrical circuit (circuitry) in which circuit elements such as semiconductor elements are combined.

In the embodiments described above, the information processing program 110 is described as being stored in advance (installed) in the non-volatile memory 103. However, the embodiments are not limited to this configuration. The information processing program 110 may be provided in a form recorded on recording media such as a compact disc read only memory (CD-ROM), a digital versatile disc read only memory (DVD-ROM), and a universal serial bus (USB) memory. Alternatively, the information processing program 110 may be downloaded from an external device via a network. That is, the program (i.e., the program product) described in the present embodiment may be provided on a recording medium or may be distributed from an external computer.

In relation to the first to third embodiments described above, the following appendices are further disclosed.

### Appendix 1

An imaging jig to be used for capturing a radiographic image of an imaging target irradiated with radiation, the imaging jig including:
a movement mechanism that moves a position of the imaging target such that a relative positional relationship between a radiation source that emits the radiation and the imaging target changes; and
a display portion in which movement amount information indicating an amount of movement of the imaging target from an initial position is to be displayed, wherein
the movement amount information is distinguishably depicted in the radiographic image.

### Appendix 2

The imaging jig according to appendix 1, in which
the movement mechanism translationally or rotationally moves the imaging target.

### Appendix 3

The imaging jig according to appendix 1 or 2, in which
a display of the movement amount information changes in conjunction with an operation of the movement mechanism.

### Appendix 4

The imaging jig according to appendix 1, in which
the movement amount information is displayed by a mark made of a material having a lower transmittance to the radiation than a material of the movement mechanism.

### Appendix 5

The imaging jig according to any one of appendices 1 to 4, in which
the movement mechanism includes
a fixed unit having a fixed relative positional relationship with the radiation source, and
a moving unit provided to be movable with respect to the fixed unit, and
the imaging target moves along with a movement of the moving unit.

### Appendix 6

The imaging jig according to appendix 5, in which
the display portion includes a first mark provided on the fixed unit and a second mark provided on the moving unit, and displays the movement amount information based on a relative positional relationship between the first mark and the second mark.

### Appendix 7

An information processing apparatus including at least one processor, the information processing apparatus being for processing a radiographic image captured using the imaging jig according to any one of claims 1 to 6,
the at least one processor being configured to:
acquire the radiographic image; and
recognize movement amount information depicted in the radiographic image.

### Appendix 8

The information processing apparatus according to appendix 7, in which
the at least one processor is configured to
recognize the movement amount information included in the radiographic image by matching the movement amount information against a template pattern corresponding to the movement amount information.

### Appendix 9

The information processing apparatus according to appendix 7 or 8, in which
a position detection mark for detecting a display position of the movement amount information is distinguishably depicted in the radiographic image, and
the at least one processor is configured to detect a position of the movement amount information included in the radiographic image, based on the position detection mark included in the radiographic image.

### Appendix 10

The information processing apparatus according to any one of appendices 7 to 9, in which
the at least one processor is configured to record movement-amount-information-associated image data in a recording medium, the movement-amount-information-associated image data being obtained by associating the movement amount information and the radiographic image with each other.

### Appendix 11

The information processing apparatus according to appendix 10, in which
the at least one processor is configured to generate a tomographic image of the imaging target using a plurality of pieces of the movement-amount-information-associated data recorded in the recording medium for a plurality of radiographic images with different relative positional relationships between the radiation source and the imaging target.

The disclosure of JP2022-111363 filed on July 11, 2022 is incorporated herein by reference in its entirety. All the documents, patent applications, and technical standards mentioned in this specification are incorporated herein by reference to the same extent as if each individual document, patent application, and technical standard were specifically and individually indicated to be incorporated by reference.

## Claims

1. An imaging jig to be used for capturing a radiographic image of an imaging target irradiated with radiation, the imaging jig comprising:
a movement mechanism that moves a position of the imaging target such that a relative positional relationship between a radiation source that emits the radiation and the imaging target changes; and
a display portion in which movement amount information indicating an amount of movement of the imaging target from an initial position is to be displayed, wherein
the movement amount information is distinguishably depicted in the radiographic image.

2. The imaging jig according to claim 1, wherein
the movement mechanism translationally or rotationally moves the imaging target.

3. The imaging jig according to claim 1, wherein
a display of the movement amount information changes in conjunction with an operation of the movement mechanism.

4. The imaging jig according to claim 1, wherein
the movement amount information is displayed by a mark made of a material having a lower transmittance to the radiation than a material of the movement mechanism.

5. The imaging jig according to claim 1, wherein
the movement mechanism includes
a fixed unit having a fixed relative positional relationship with the radiation source, and
a moving unit provided to be movable with respect to the fixed unit, and
the imaging target moves along with a movement of the moving unit.

6. The imaging jig according to claim 5, wherein
the display portion includes a first mark provided on the fixed unit and a second mark provided on the moving unit, and displays the movement amount information based on a relative positional relationship between the first mark and the second mark.

7. An information processing apparatus comprising at least one processor, the information processing apparatus being for processing a radiographic image captured using the imaging jig according to any one of claims 1 to 6,
the at least one processor being configured to:
acquire the radiographic image; and
recognize movement amount information depicted in the radiographic image.

8. The information processing apparatus according to claim 7, wherein
the at least one processor is configured to
recognize the movement amount information included in the radiographic image by matching the movement amount information against a template pattern corresponding to the movement amount information.

9. The information processing apparatus according to claim 7, wherein
a position detection mark for detecting a display position of the movement amount information is distinguishably depicted in the radiographic image, and
the at least one processor is configured to detect a position of the movement amount information included in the radiographic image, based on the position detection mark included in the radiographic image.

10. The information processing apparatus according to claim 7, wherein
the at least one processor is configured to record movement-amount-information-associated image data in a recording medium, the movement-amount-information-associated image data being obtained by associating the movement amount information and the radiographic image with each other.

11. The information processing apparatus according to claim 10, wherein
the at least one processor is configured to generate a tomographic image of the imaging target using a plurality of pieces of the movement-amount-information-associated data recorded in the recording medium for a plurality of radiographic images with different relative positional relationships between the radiation source and the imaging target.

## Amended claims

### Amended claims under Art. 19.1 PCT

1. An imaging jig to be used for capturing a radiographic image of an imaging target irradiated with radiation, the imaging jig comprising:
a movement mechanism that moves a position of the imaging target such that a relative positional relationship between a radiation source that emits the radiation and the imaging target changes; and
a display portion in which movement amount information indicating an amount of movement of the imaging target from an initial position is to be displayed, wherein
the movement amount information is distinguishably depicted in the radiographic image.

2. The imaging jig according to claim 1, wherein
the movement mechanism translationally or rotationally moves the imaging target.

3. The imaging jig according to claim 1, wherein
a display of the movement amount information changes in conjunction with an operation of the movement mechanism.

4. The imaging jig according to claim 1, wherein
the movement amount information is displayed by a mark made of a material having a lower transmittance to the radiation than a material of the movement mechanism.

5. The imaging jig according to claim 1, wherein
the movement mechanism includes
a fixed unit having a fixed relative positional relationship with the radiation source, and
a moving unit provided to be movable with respect to the fixed unit, and
the imaging target moves along with a movement of the moving unit.

6. The imaging jig according to claim 5, wherein
the display portion includes a first mark provided on the fixed unit and a second mark provided on the moving unit, and displays the movement amount information based on a relative positional relationship between the first mark and the second mark.

7. An information processing apparatus comprising at least one processor, the information processing apparatus being for processing a radiographic image captured using the imaging jig according to any one of claims 1 to 6,
the at least one processor being configured to:
acquire the radiographic image; and
recognize movement amount information depicted in the radiographic image.

8. The information processing apparatus according to claim 7, wherein
the at least one processor is configured to
recognize the movement amount information included in the radiographic image by matching the movement amount information against a template pattern corresponding to the movement amount information.

9. The information processing apparatus according to claim 7, wherein
a position detection mark for detecting a display position of the movement amount information is distinguishably depicted in the radiographic image, and
the at least one processor is configured to detect a position of the movement amount information included in the radiographic image, based on the position detection mark included in the radiographic image.

10. The information processing apparatus according to claim 7, wherein
the at least one processor is configured to record movement-amount-information-associated image data in a recording medium, the movement-amount-information-associated image data being obtained by associating the movement amount information and the radiographic image with each other.

11. The information processing apparatus according to claim 10, wherein
the at least one processor is configured to generate a tomographic image of the imaging target using a plurality of pieces of the movement-amount-information-associated data recorded in the recording medium for a plurality of radiographic images with different relative positional relationships between the radiation source and the imaging target.

12. (New) The imaging jig according to claim 1, wherein
a value of the amount of movement indicated by the movement amount information changes in conjunction with an operation of the movement mechanism.
